# EUROPEAN PATENT APPLICATION

(11) **EP 1 772 770 A1**
(43) Date of publication of application: **11.04.2007**
(21) Application number: 05727484.7
(22) Date of filing: 30.03.2005
(51) Int. Cl.: G02F 1/361, C01B 31/02, C08K 3/04, C08L 79/08

(54) **SATURABLE ABSORBER OF POLYIMIDE CONTAINING DISPERSED CARBON NANOTUBES**

(30) Priority: 02.04.2004 JP 2004109907
(71) Applicant: National Institute of Advanced Industrial Science and Technology, Tokyo 100-8921 (JP)
(72) Inventor: SAKAKIBARA, Y., Nat. Inst. of Adv. Ind. Sci. & Tec, Tsukuba-shi, Ibaraki 305-8565 (JP); TOKUMOTO, M., Nat. Inst. of Adv. Ind. Sci. & Tech., Tsukuba-shi, Ibaraki 305-8568 (JP); KATAURA, H., Nat. Inst. of Adv. Ind. Sci. & Tec, Tsukuba-shi, Ibaraki 305-8562 (JP)
(74) Representative: Lang, Johannes
(86) International application number: PCT/JP2005/006054
(87) International publication number: WO 2005/096089

(57) **Abstract**

A carbon nanotube-dispersed polyimide saturable absorber excellent in an optical quality, obtainable by mixing a carbon nanotube dispersion liquid comprising a carbon nanotube, an amide-based polar organic solvent, and a nonionic surfactant and/or a polyvinylpyrrolidone (PVP) with a mixture solution of a solvent soluble polyimide and an organic solvent. A method for producing the same, comprising the steps of dispersing a single-walled carbon nanotube in a mixture solution of an amide-based polar organic solvent and a nonionic surfactant under intensive stirring, mixing the resultant dispersion liquid with a polyimide mixed organic solvent, and removing the solvent.

## Description

### Technical Field

The present invention relates to a saturable absorber for the near-infrared wavelength region using single-walled carbon nanotubes uniformly dispersed in a polyimide, and to a method for producing the same.

### Background Art

Saturable absorption effect, one of the third-order nonlinear optical effects, is a large nonlinear optical effect associated with actual photoexcitation of the substance, and is such that both of the real and imaginary parts of the substance refractive index are significantly changed depending on light intensity. This effect can be used, for example, for all-optical switches capable of switching light signals without converting to electrical signals. It can be used also for passive mode lockers in mode locking pulsed lasers and for passive Q switches in Q switch pulsed lasers. In addition, it can be used also for various nonlinear optical devices and apparatuses utilizing nonlinear changes of optical properties such as refractive index, reflectivity, and transmittance depending on incident light intensity. The devices using the saturable absorption effect can act as passive devices, and thereby apparatuses with such devices are advantageously more compact, more stable, and more inexpensive than those with active devices using electrical modulation, magnetic modulation, etc. Particularly the near-infrared region includes emission wavelength regions of some important solid state lasers, and further is used for optical communication, so that development of excellent saturable absorption materials for this wavelength region has been demanded also in view of optical application.

Carbon nanotubes have attracted much attention as materials having the saturable absorption effect in the near-infrared region. In the carbon nanotubes, a sheet-like hexagonal network structure of carbon atoms are formed into a tube in parallel to the axis of the tube, and the unique mechanical, electrical, thermal, and optical properties of the carbon nanotubes have been attracted interest. The carbon nanotubes are classified into multi-walled ones (MWNTs) and single-walled ones (SWNTs) according to the number of the hexagonal network tube. It is known that the SWNTs with semiconducting properties have strong optical absorption in the near-infrared region (0.7 to 2 µm), whereby application of the SWNTs to optical devices for operating in the optical communication wavelength region has been studied. For example, the use of a saturable absorber, which is obtained by the steps of solution-dispersing a SWNT on a glass substrate, spraying the dispersion, and forming into a thin film, has been proposed (see Patent Document 1 shown below). However, in the case of spraying the SWNT solution onto the glass substrate, the resultant coating do not have a uniform thickness, and further the carbon nanotube is nonuniformly aggregated and attached, so that it is difficult to form the SWNT into a thin film optically uniformly with small light scattering on the glass substrate. Thus, the resultant has optical qualities varying according to positions, and cannot be used for producing devices with excellent reproducibility. Further, the attachment to the glass substrate is poor, whereby it is difficult to produce stable devices.

Though nonlinear optical materials containing a polyimide and a carbon nanotube have been proposed, it is practically difficult to uniformly disperse a SWNT in a polyimide, and practically satisfactory materials have not been formed at present. For example, in the following Patent Document 2, a SWNT and a polyimide are mixed by the steps of dissolving the SWNT in a γ-butyrolactone solvent under ultrasonication, dissolving the polyimide in the same γ-butyrolactone solvent, and mixing both the liquids. However, it is practically difficult to dissolve the SWNT in γ-butyrolactone, and even if the SWNT can be mixed with γ-butyrolactone, the SWNT cannot be dispersed uniformly. Thus, the SWNT cannot be uniformly dispersed in the polyimide to produce an optically uniform polyimide material with small light scattering.
Patent Document 1: JP-A-2003-121892
Patent Document 2: United States Patent Publication No. 2002/0176650

### Disclosure of the Invention

### Problems that the Invention is to Solve

An object of the present invention is to provide a material having optically uniform qualities excellent in light transmittance and heat resistance as a saturable absorber using a carbon nanotube capable of operating in the near-infrared wavelength region, and a method for producing the same. In view of the object, if carbon nanotubes can be uniformly dispersed in a transparent, heat-resistant material, a saturable absorber with uniform light transmittance and heat resistance, excellent in device reproducibility, should be able to be obtained. Herein polyimides have been widely used as various functional materials, are excellent in transparency and heat resistance, and can be formed or worked into thin films on substrates of glass, etc., can be formed into self-supporting films, and can be processed into optical waveguides. Therefore, if carbon nanotubes can be dispersed therein, there can be provided an excellent saturable absorption material.

In general, when carbon nanotubes are dispersed in a material, the carbon nanotube is formed into a bundle or cord due to the cohesive force (van der Waals force) between the carbon nanotube molecules, and thereby it is very difficult to uniformly disperse the carbon nanotube. Due to such a property of the carbon nanotube, it has been difficult to mix and disperse the carbon nanotube in a polyimide. Particularly it has been extremely difficult to form a polyimide material excellent in optical qualities, in which carbon nanotubes are uniformly dispersed.

Thus, in the invention, the problem is how to uniformly disperse carbon nanotubes in a polyimide.

### Means for Solving the Problem

In the present invention, the transparency and heat resistance of polyimides are noticed, and there is provided an optically uniform saturable absorber excellent in transparency, heat resistance, and device reproducibility by uniformly dispersing a carbon nanotube in a polyimide.

The problem is solved by uniformly dispersing the carbon nanotube in the polyimide, particularly by dissolving a nonionic surfactant and/or a polyvinylpyrrolidone (PVP) in an amide-based polar organic solvent, particularly NMP (N-methylpyrrolidone) and/or dimethylacetamide (DMAC), to uniformly disperse the carbon nanotube in a solvent soluble polyimide.

Specific constituent features of the invention are as follows.
(1) A carbon nanotube-dispersed saturable absorber excellent in an optical quality, obtainable by mixing a carbon nanotube dispersion liquid comprising a carbon nanotube, an amide-based polar organic solvent, and a nonionic surfactant and/or a polyvinylpyrrolidone (PVP) with a mixture solution of a solvent soluble polyimide and an organic solvent.
(2) The carbon nanotube-dispersed saturable absorber according to (1), wherein the carbon nanotube is a single-walled carbon nanotube (SWNT).
(3) The saturable absorber according to (1) or (2), wherein the amide-based polar organic solvent comprises N-methylpyrrolidone (NMP) and/or dimethylacetamide.
(4) The saturable absorber according to any one of (1) to (3), wherein the nonionic surfactant is a polyoxyethylene surfactant.
(5) The saturable absorber according to any one of (1) to (4), wherein the content of the nonionic surfactant is 0.005 to 5% by weight in the carbon nanotube dispersion liquid.
(6) The saturable absorber according to any one of (1) to (5), wherein the content of the polyvinylpyrrolidone (PVP) is 0.1 to 10% by weight in the carbon nanotube dispersion liquid.
(7) A method for producing a saturable absorber, characterized by comprising the steps of dispersing a single-walled carbon nanotube in a mixture solution of an amide-based polar organic solvent and a nonionic surfactant under intensive stirring, mixing the resultant dispersion liquid with a polyimide mixed organic solvent, and removing the solvent.
(8) A method for producing a saturable absorber, characterized by comprising the steps of dispersing a single-walled carbon nanotube in a mixture solution of an amide-based polar organic solvent and a nonionic surfactant under intensive stirring, mixing a polyvinylpyrrolidone (PVP) therewith, mixing the resultant dispersion liquid with a polyimide mixed organic solvent, and removing the solvent.
(9) The method for producing a saturable absorber according to (7) or (8), characterized in that the obtained single-walled carbon nanotube dispersion liquid is treated with a filter having a retaining particle size of 0.1 to 3.0 µm to obtain a liquid comprising fine particles of the single-walled carbon nanotube.

The carbon nanotube used in the invention may be any one of single-walled and multi-walled carbon nanotubes, and is preferably a single-walled carbon nanotube (SWNT). It is known that the carbon nanotubes, particularly the SWNTs, have high saturable absorption functions. The method for producing the carbon nanotube is not particularly limited, and may be a known method such as a thermal decomposition method using a catalyst (similar to a vapor growth method), an arc discharge method, a laser vaporization method, or a HiPco method (High-pressure carbon monoxide method).

Production of the SWNT preferred in the invention by the laser vaporization method is illustrated below. A mixture rod of a graphite powder and fine powders of nickel and cobalt was prepared as starting material. This mixture rod was heated at 1,250°C by an electric furnace under argon atmosphere at 665 hPa (500 Torr), and was irradiated with a second harmonic pulse of an Nd: YAG laser at 350 mJ/Pulse, thereby evaporating the carbon and the fine metal particles to produce the SWNT.

The above production method is a typical example illustrative only, the types of the metals, type of the gas, temperature of the electric furnace, wavelength of the laser, etc. can be changed. Further, the SWNT may be produced by a method other than the laser vaporization method, such as a CVD method, arc discharge method, thermal carbon monoxide decomposition method, template method of inserting and thermally decomposing organic molecules in fine pores, or fullerene metal codeposition method.

Polyimides are resins developed by Du Pont in 1963, are excellent in heat resistance, transparency, and mechanical properties, and thereby have been widely used as functional resins in various electronic materials. In the invention, a solvent soluble polyimide is used for dispersing the carbon nanotube uniformly.

Generally the polyimides are hardly soluble in solvents, and it is difficult to uniformly disperse the carbon nanotube in common polyimides. Thus, in the invention, it is important to prepare the solvent soluble polyimide beforehand by selecting combination of an acid dianhydride and an aromatic diamine, molecular weight, and molecular weight distribution to control the solvent solubility. In general, most of 2-component polyimides are soluble in solvents, and 3-component ones have further increased solubility. Aromatic polyimides are preferably used as the solvent soluble polyimide. Particularly preferred are block-copolymerized aromatic polyimides.

In the invention, to uniformly disperse the carbon nanotube in the solvent soluble polyimide; the SWNT may be added to and mixed with a mixture solution of an NMP (N-methylpyrrolidone) solvent and a nonionic surfactant and/or a mixture solution of a polyvinylpyrrolidone (PVP), and treated with ultrasonic wave, thereby preparing an SWNT dispersion liquid. Then, the SWNT dispersion liquid may be subjected to ultracentrifugation or filtration using a glass fiber filter or a membrane filter, to obtain a liquid with only fine particles of the SWNT dispersed. The filtration may be carried out after preparing the SWNT dispersion liquid or after mixing the dispersion liquid with the polyimide mixed organic solvent.

The amide-based polar organic solvent used in the invention may be specifically dimethylformamide (DMF), diethylformamide, dimethylacetamide (DMAC), N-methylpyrrolidone (NMP), etc., and particularly preferably comprises N-methylpyrrolidone (NMP) and/or dimethylacetamide (DMAC). Many organic substances (other than low hydrocarbons), inorganic substances, polar gases, and natural and high-molecular resins can be dissolved in these solvents. The solvent soluble polyimide used in the invention can be dissolved in these amide-based polar organic solvents. Thus, when the carbon nanotube can be uniformly dispersed in these solvents, the solvent soluble polyimide in which the carbon nanotube is uniformly dispersed therein can be obtained by dissolving the solvent soluble polyimide in the carbon nanotube dispersion liquid.

The nonionic surfactant used in the invention may have a polyoxyethylene-based system, polyol fatty ester-based system, or the both thereof, and is particularly preferably a polyoxyethylene surfactant. Examples of the polyoxyethylene surfactants include polyoxyethylene ethers of fatty acids, polyoxyethylene ethers of higher alcohols, alkylphenol polyoxyethyleneethers, polyoxyethylene ethers of sorbitan esters, polyoxyethylene ethers of castor oils, polyoxyethylene ethers of polyoxypropylenes, and fatty acid alkylol amides. Examples of the polyol fatty ester surfactants include monoglycerite surfactants, sorbitol surfactants, sorbitan surfactants, and sugar ester surfactants.

The amount of the nonionic surfactant may be appropriately determined depending on the SWNT amount and the type of the amide-based polar organic solvent, and generally a sufficient effect of dispersing the SWNT can be achieved when the content of the nonionic surfactant is 0.005 to 10% in the dispersion liquid. When the nonionic surfactant content is equal to or less than 0.005%, the ratio of the surfactant to the SWNT is low, so that part of the nanotube is aggregated to generate a precipitate. On the other hand, when the content is equal to or more than 10%, it is difficult to cause rotation of the surfactant molecules in the solvent, a sufficient amount of hydrophobic portion of the surfactant cannot be adsorbed to the hydrophobic nanotube surface, and this is disadvantageous in dispersion of fine nanotube. In addition, when the SWNT content of the dispersion liquid is 0.005 to 0.05%, the nonionic surfactant content is preferably 0.01 to 5%.

The SWNT content may be changed depending on the purposes, and is not particularly limited as long as it has dispersibility. In the case of dispersing the SWNT in the mixture solution of NMP and the polyoxyethylene surfactant, the SWNT can be dispersed up to 0.05% content.

In the invention, the intensive stirring is stirring by ultrasonication, ultravibration, etc. The ultrasonication is preferably used. In the invention, the ultrasonication may be carried out at under conditions of 20 kHz and 150 W, and 28 kHz and 140 W, for approximately 1 hour, to achieve an excellent dispersing effect, and the ultrasonication conditions are not limited thereto. The conditions may be appropriately determined depending on the amount of the carbon nanotube, the type of the amide-based polar organic solvent, etc.

The filter used in the invention may be a glass fiber filter, a membrane filter, etc. The retaining particle size of the filter may be selected depending on the purposes. The retaining particle size is obtained from the particle size of barium sulfate, etc. passed through the filter in natural filtration in accordance with JIS 3801, and substantially corresponds to the average pore size of the filter. For example, in a case where the dispersion liquid is used for optical instruments utilizing light scattering reduction, a smaller retaining particle size of the filter is more preferred. The retaining particle size may be generally 0.1 to 2.0 µm, preferably 0.1 to 1.0 µm.

The polyvinylpyrrolidone (PVP) may be mixed with the carbon nanotube dispersion liquid used in the invention. It is known that the polyvinylpyrrolidone is adsorbed to the carbon nanotube surface to enclose the carbon nanotube, thereby showing a so-called wrapping effect. Thus, it is considered that, when the polyvinylpyrrolidone is added to the carbon nanotube dispersion liquid, the polyvinylpyrrolidone acts to prevent aggregation and reaggregation of the carbon nanotube.

The content of the polyvinylpyrrolidone in the carbon nanotube dispersion liquid may be appropriately determined depending on the amount of the carbon nanotube, and is preferably 0.1% to 10%.

The polyvinylpyrrolidone is adsorbed onto the carbon nanotube surface and shows the effect of preventing the aggregation and reaggregation of the carbon nanotube. The dispersion liquid is mixed with a solution of the block-copolymerized polyimide and the organic solvent such as NMP. For example, thus obtained mixture solution may be formed into a thin film by spin-coating a substrate with the solution and by evaporating the solvent. The carbon nanotube-dispersed polyimide of the invention may be obtained in this manner.

Thus obtained carbon nanotube-dispersed polyimide solution may be formed into a thin film by the steps of evaporating part of the NMP solvent in vacuo to achieve an appropriate viscosity, dropping part of the mixture solution on a glass substrate, applying the solution using a doctor blade method, a spin coating method, etc., and evaporating the NMP solvent.

### Brief Description of the Drawings

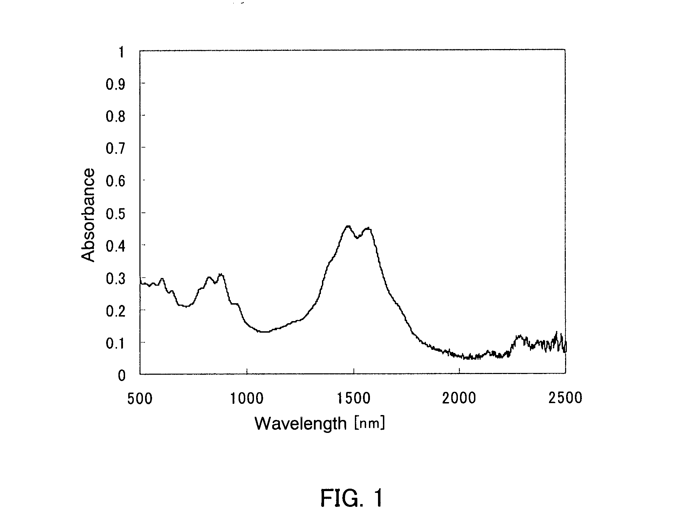

[Fig. 1] A linear absorption spectrum of a sample of SWNT-dispersed polyimide thin film (thickness 80 µm) formed on a glass substrate, in which incident light wavelength and absorbance are plotted in abscissa and ordinate respectively.
[Fig. 2] A schematic configuration view for expounding a Z-scanning method.

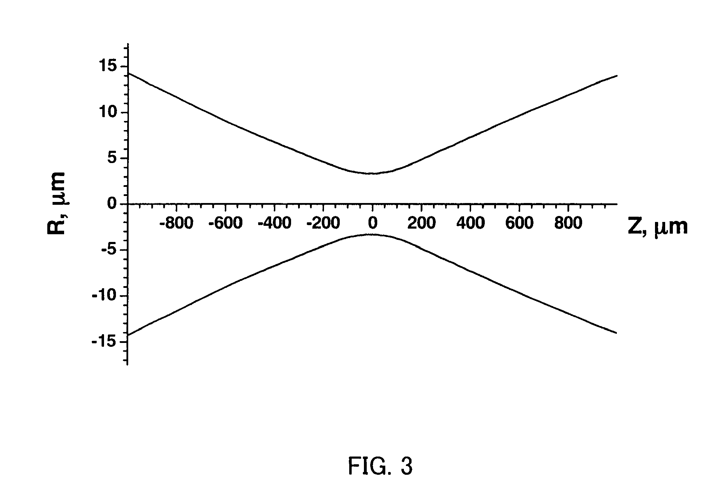

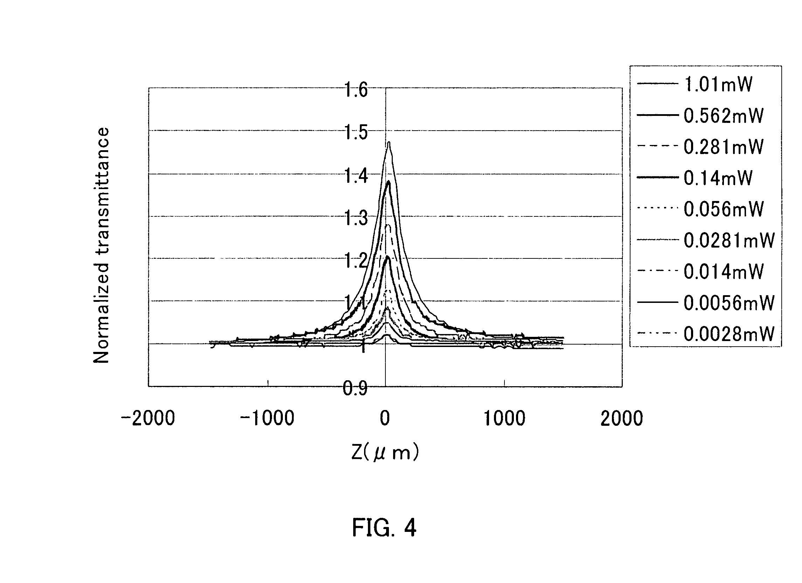

[Fig. 3] A profile of beam diameter around a focal spot X, in which position Z and beam radius (radius at which the light intensity is 50% of intensity at the beam center) are plotted in abscissa and ordinate respectively. [Fig. 4] A graph showing results of measuring the saturable absorption of an SWNT-dispersed polyimide thin film sample (thickness 80 µm) formed on a glass substrate by a Z-scanning method. Position Z and standardized transmittance using a standard of transmittance at a position -1500 µm away from the focal spot X are plotted in abscissa and ordinate respectively. Behaviors against change of average incident laser light power are summarized.

### Description of Reference Numerals and Signs

- 1: Femtosecond fiber laser apparatus
- 2: Variable optical attenuator
- 3: Single mode optical fiber
- 4: Lens
- 5: Lens
- 6: Sample
- 7: Optical receiver

### Best Mode for Carrying Out the Invention

The carbon nanotube-dispersed polyimide thin film of the present invention was practically produced and the saturable absorption function thereof was examined in the following manner. The following Examples are merely exemplary of the invention, and the scope of the invention is not restricted to the examples.

### Example 1

### (Preparation of carbon nanotube dispersion liquid)

SWNTs (3 mg) were added to and mixed with a solution of an NMP (N-methylpyrrolidone) solvent (30 g) and a nonionic surfactant Triton X-100 (30 mg), and treated with an ultrasonic wave at 20 kHz for 5 hours. Then the dispersion was filtered with a glass fiber filter (GC-50, retaining particle size 0.5 µm) to obtain a carbon nanotube dispersion liquid.

### (Preparation of carbon nanotube-dispersed polyimide)

A commercially available, solvent soluble polyimide (Q-AD-XA100KI available from PI R&D Co., Ltd.) was dissolved in an NMP solvent (30 g). The obtained polyimide-mixed solvent and the carbon nanotube dispersion liquid prepared above were mixed and stirred, to obtain a black colored uniform solution. The NMP solvent was partly evaporated in vacuo such that the mixture had an appropriate viscosity, and then part of the mixture was dropped onto a glass substrate and spread by a doctor blade method, and the NMP solvent was evaporated to form a thin film. As a result of observing the thin film by an optical microscope, aggregation of the nanotube was not found. Further, as a result of measuring the microscopic Raman spectra and visible/near-infrared absorption spectra of the thin film, Raman signals and light absorption of the nanotube were detected. Thus, it was confirmed that the SWNT could be uniformly dispersed in the solvent soluble polyimide.

### (Examination of saturable absorption function)

To confirm the saturable absorption effect of the above obtained SWNT-dispersed polyimide, the saturable absorption function was measured by a procedure known as a Z-scanning method.

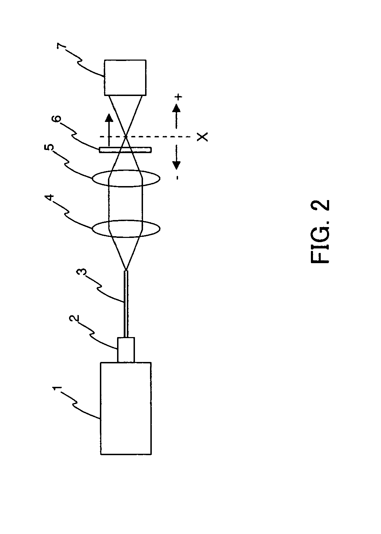

As shown in Fig. 2, a variable optical attenuator 2 is placed on a fiber optical output terminal of a femtosecond fiber laser apparatus 1, an intensity-variable output light is transferred through a single mode optical fiber 3, and the light discharged and spread from the end of the fiber is converted to a parallel light by a lens 4, injected into a lens 5, and condensed at an intermediate point (a focal spot X) between the lens 5 and an optical receiver 7. Then, a measuring object sample 6 is transferred along the movement direction of the laser light from the lens 4 to the optical receiver 7. The position Z of the sample 6 is 0 (zero) when the sample 6 is at the focal spot X, Z is - (minus) when the sample 6 is nearer the lens 4, and Z is + (plus) when the sample 6 is nearer the optical receiver 7. The quantity of light applied to unit area of the sample 6 is maximum when Z is 0, and the light quantity is reduced as the sample 6 departs from the focal spot in the + or - direction. Thus, only by changing the position Z of the sample 6, the transmittance change due to the increase and decrease of incident light intensity can be measured by the optical receiver 7.

The SWNT-dispersed polyimide thin film having a thickness of 80 µm formed above on the glass substrate was used as a sample, the saturable absorption function was examined by increase of the transmittance around the focal spot X. The femtosecond fiber laser had a wavelength of 1,560 nm, a pulse width of 370 fs, and frequency 50 MHz, the optical fiber was a single mode fiber, and the lenses 4, 5 were aspherical lenses having a focal distance of 11 mm. A beam diameter profile around the focal spot is shown in Fig. 3.

The results of the measurement by the Z-scanning method are shown in Fig. 4. In Fig. 4, the position (Z) of the sample is shown in the abscissa, and the transmitted light intensity, standardized in a case where the transmitted light intensity is 1 in a position sufficiently away from the focal spot X, is shown in the ordinate. Increase of the transmittance due to absorption reduction was observed around a position of Z = 0 (the focal spot). And the larger the average incident light power was, the more remarkable the transmittance increase was. Thus, it was found that the SWNT dispersed polyimide thin film shows absorption saturation in an absorption band of the near-infrared region.

### Example 2

SWNTs dispersed liquid were prepared by the steps of adding 200 mg of polyvinylpyrrolidone (PVP) powder having an average molecular weight of 360,000 to the dispersion solvent of Example 1, stirring the resultant to dissolve the powder, and filtrating the mixture (retaining particle size 0.5 µm), and the SWNT dispersed liquid was mixed and stirred with the polyimide obtained in Example 1, and then the mixture was formed into an SWNT-dispersed polyimide thin film on a glass substrate using a doctor blade method. As a result of observing the thin film by an optical microscope, aggregation of the SWNT was not found.

The saturable absorption property of the thin film was measured by the Z-scanning method in the same manner as Example 1. Increase of the transmittance was observed around the position of Z = 0 (the focal spot), and thereby it was found that the SWNT dispersed polyimide thin film shows absorption saturation in an absorption band of the near-infrared region.

### (Comparative Example 1)

SWNTs (1 mg) were added to and mixed with 10 g of γ-butyrolactone, and treated with an ultrasonic wave (20 kHz) for 1 hour. As a result, the carbon nanotube was aggregated to generate a precipitate. Thus, the obtained mixture cannot be mixed with and dispersed in a polyimide.

### (Comparative Example 2)

SWNTs (1 mg) were added to and mixed with a solution of 10 g of γ-butyrolactone and 10 mg of a polyoxyethylene surfactant Triton (trademark) X-100. The mixture was treated with an ultrasonic wave (20 kHz) for 1 hour, and as a result, a black suspension was obtained. Then the black suspension was divided into two, and filtered with a glass fiber filter paper (GA-100, retaining particle size 1.0 µm) and a glass fiber filter (GC-50, retaining particle size 0.5 µm). As a result of evaluating the resultant filtrates, the filtrates were both transparent, and thereby it was found that the SWNT was not filtrated and remained. Thus, the SWNT cannot be uniformly mixed and dispersed in the polyimide by this method.

### Industrial Applicability

The SWNT-dispersed polyimide obtained in the present invention is such that the SWNT is uniformly dispersed in the polyimide to show reduced light scattering properties, and is remarkably useful as a saturable absorption material in the infrared region. Thus, by utilizing the saturable absorption properties, the SWNT-dispersed polyimide can be used for optical switches, passive mode lockers, passive Q switches, saturable absorption mirrors, waveform shapers, signal light noise reduction apparatus, etc.

## Claims

1. A carbon nanotube-dispersed polyimide saturable absorber excellent in an optical quality, obtainable by mixing a carbon nanotube dispersion liquid comprising a carbon nanotube, an amide-based polar organic solvent, and a nonionic surfactant and/or a polyvinylpyrrolidone (PVP) with a mixture solution of a solvent soluble polyimide and an organic solvent.

2. The saturable absorber according to claim 1, wherein the carbon nanotube is a single-walled carbon nanotube.

3. The saturable absorber according to claim 1, **characterized in that** the amide-based polar organic solvent comprises N-methylpyrrolidone (NMP) and/or dimethylacetamide.

4. The saturable absorber according to claim 1, **characterized in that** the nonionic surfactant is a polyoxyethylene surfactant.

5. The saturable absorber according to claim 1, **characterized in that** the content of the nonionic surfactant is 0.005 to 5% by weight in the carbon nanotube dispersion liquid.

6. The saturable absorber according to claim 1, **characterized in that** the content of the polyvinylpyrrolidone (PVP) is 0.1 to 10% by weight in the carbon nanotube dispersion liquid.

7. A method for producing a saturable absorber, **characterized by** comprising the steps of dispersing a single-walled carbon nanotube in a mixture solution of an amide-based polar organic solvent and a nonionic surfactant under intensive stirring, mixing the resultant dispersion liquid with a polyimide mixed organic solvent, and removing the solvent.

8. A method for producing a saturable absorber, **characterized by** comprising the steps of dispersing a single-walled carbon nanotube in a mixture solution of an amide-based polar organic solvent and a nonionic surfactant under intensive stirring, mixing a polyvinylpyrrolidone (PVP) therewith, mixing the resultant dispersion liquid with a polyimide mixed organic solvent, and removing the solvent.

9. The method for producing a saturable absorber according to claim 7, **characterized in that** the obtained single-walled carbon nanotube dispersion liquid is treated with a filter having a retaining particle size of 0.1 to 3.0 µm to obtain a dispersion liquid comprising fine particles of the single-walled carbon nanotube.
